# EUROPÄISCHE PATENTSCHRIFT

(11) **EP 1 055 867 B1**
(45) Veröffentlichungstag und Bekanntmachung des Hinweises auf die Patenterteilung: **21.04.2004**
(21) Anmeldenummer: 00109702.1
(22) Anmeldetag: 08.05.2000
(51) Int. Cl.: F21S 8/10, F21V 8/00

(54) **Stabförmiger Lichtleiter**
Rod-shaped light guide
Guide de lumière en forme de barre

(30) Priorität: 27.05.1999 DE 19924411
(43) Veröffentlichungstag der Anmeldung: 29.11.2000
(73) Patentinhaber: Hella KG Hueck & Co., 59552 Lippstadt (DE)
(72) Erfinder: Neumann, Cornelius, Dr., 33649 Bielefeld (DE)

(56) Entgegenhaltungen:
- DE-A- 4 129 094
- DE-A- 4 341 555
- US-A- 4 631 642
- PATENT ABSTRACTS OF JAPAN vol. 1996, no. 05, 31. Mai 1996 (1996-05-31) -& JP 08 021918 A (NISSHIN KOKI KK), 23. Januar 1996 (1996-01-23)

## Beschreibung

Die Erfindung betrifft einen stabförmigen Lichtleiter nach dem Oberbegriff des Patentanspruchs 1.

Stabförmige Lichtleiter werden in Kraftfahrzeugen beispielsweise zur Beleuchtung von Anzeigeeinrichtungen, eines Innenraumes oder als Signalleuchte verwendet.

Aus der DE 41 29 094 A1 ist ein stabförmiger Lichtleiter einer Signalleuchte für Kraftfahrzeuge bekannt, der eine quer zu seiner Längsachse angeordnete Lichtaustrittsfläche und eine der Lichtaustrittfläche gegenüberliegend angeordnete Reflexionsfläche mit einer Vielzahl von Prismen aufweist. An einem Ende weist der stabförmige Lichtleiter einen sich zu einer Stirnfläche hin verjüngenden Lichteinkoppelbereich auf. Die Stirnfläche ist dabei als eine Lichteinkoppelfläche ausgebildet, die eine auf eine ihr vorgelagerte Lichtquelle abgestimmte konkave bzw. sphärische Form aufweist. Die der Stirn- bzw. Lichteinkoppelfläche vorgelagerte Lichtquelle ist als eine Leuchtdiode ausgebildet, deren linsenförmige Lichtaustrittsfläche der Lichteinkoppelfläche benachbart ist. Der Lichteinkoppelbereich ist dabei kegelförmig ausgebildet.

Nachteilig bei dem bekannten stabförmigen Lichtleiter ist, dass die Lichtverteilung in den Lichtleitern sowie der lichttechnische Wirkungsgrad noch verbesserungsbedürftig ist.

Aus der DE 43 41 555 A1 ist ein stabförmiger Lichtleiter bekannt, dem ein Reflektor mit einem ellipsoiden Teil und einem hyperboloiden Teil vorgelagert ist. Sowohl der erste Brennpunkt als auch der zweite Brennpunkt des ellipsoiden Teils sind dem Lichtleiter vorgelagert. Der zusätzliche Reflektor ist relativ voluminös; ferner ergeben sich unerwünschte Einkoppel- und Reflexionsverluste.

Aufgabe der vorliegenden Erfindung ist es daher, den bekannten stabförmigen Lichtleiter so zu verbessern, dass seine Lichtverteilung und sein lichttechnischer Wirkungsgrad weiter optimiert werden.

Diese Aufgabe wird erfindungsgemäß durch die Merkmale des Patentanspruches 1 gelöst.

Dadurch, dass der Lichteinkoppelbereich im wesentlichen als ein ellipsoidförmiger Bereich ausgebildet ist, der eingekoppeltes Licht nach dem Prinzip der Totalreflektion in einem zweiten Brennpunkt sammelt, kann die horizontale Lichtverteilung des stabförmigen Lichtleiters optimiert werden. In Verbindung mit der Länge des Lichtleiters kann auch die Homogenität des Lichtleiters verbessert werden. Radial an der Lichteinkoppelfläche eingekoppelte Lichtstrahlen werden so im Lichteinkoppelbereich total reflektiert und durch den zweiten Brennpunkt des Halbellipsoids geführt. Das von dem oberen Lichteinkoppelbereich reflektierte Licht wird direkt an der Reflexionsfläche reflektiert und über die Lichtaustrittfläche ausgekoppelt. Das im unteren Lichteinkoppelbereich total reflektierte Licht wird über eine weitere Totalreflexion im Bereich der Lichtaustrittsfläche reflektiert und zur Reflexionsfläche geleitet, wo es erneut reflektiert und über die Lichtaustrittfläche ausgekoppelt wird. So entsteht eine effiziente Umlenkung, die zum einen den auskoppelbaren Lichtanteil erhöht und zum anderen durch die Wahl der Ausformung des Ellipsoids die Winkelstreuung im Bereich der Reflexionsfläche verbessert.

Gemäß einer weiteren bevorzugten Ausführungsform der Erfindung, weist ein Halbellipsoid in seiner der Lichtaustrittsfläche benachbarten oberen Hälfte eine obere Ausformung mit einem oberen zweiten Brennpunkt und in seiner der Reflexionsfläche benachbarten unteren Hälfte eine untere Ausformung mit einem unteren zweiten Brennpunkt auf. Die obere und untere Hälfte des Ellipsoids weisen eine unterschiedliche Ausformung auf, so dass der obere zweite Brennpunkt und der untere zweite Brennpunkt in einem Abstand zueinander auf der Längsachse angeordnet sind. Der erste Brennpunkt der oberen und der unteren Hälfte des Ellipsoids sind dabei an der gleichen Stelle der Längsachse angeordnet.

Durch eine unterschiedliche Ausformung des Halbellipsoids in seiner oberen und seiner unteren Hälfte ist eine weitere optimierte Lichtverteilung in dem stabförmigen Lichtleiter möglich.

Nach einer weiteren bevorzugten Ausführungsform der Erfindung ist die Lichtquelle als eine Leuchtdiode, beispielsweise eine SMD-Diode auf einer benachbarten Leiterplatte abgebildet. Durch die Leuchtdiode (LED) lässt sich Licht kostengünstig und effizient in den stabförmigen Lichtleiter einkoppeln.

Nach einer weiteren bevorzugten Ausführungsform der Erfindung sind die reflektierende Mittel als Prismen ausgebildet.

Durch die Verwendung von Prismen als reflektierende Mittel läßt sich eine weitere Optimierung der Lichtverteilung in dem Lichtleiter erzielen.

Dadurch, dass der Lichtleiter zumindest in einem Abschnitt bogenförmig verläuft, ist eine einfache Anpassung an unterschiedliche Konturverläufe möglich.

Nach einer weiteren bevorzugten Ausführungsform der Erfindung ist die Lichteintrittsfläche auf die Linse einer LED formschlüssig angepasst und hebt damit die optische Wirkung dieser Linse auf. Damit wird erreicht, dass das von der LED abgestrahlte Licht möglichst breit verteilt auf die ellipsoide Einkoppelfläche trifft und die Wirkung der Fläche gut ausgenutzt wird. Der Formschluss zwischen LED und Stab kann auf verschiedene Arten, wie beispielsweise mechanisches Andrücken, Verkleben oder Anspritzen erfolgen.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

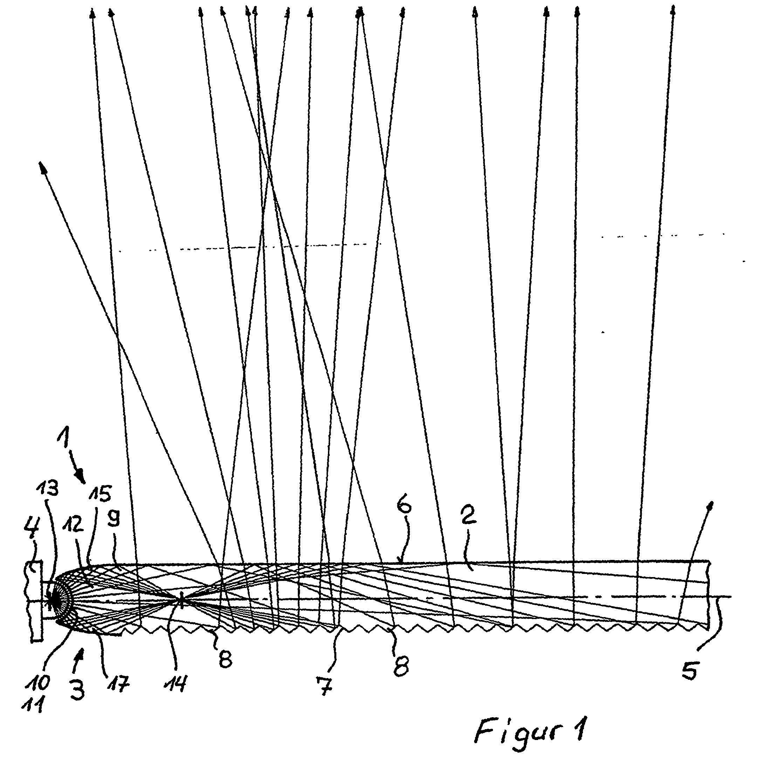

- Figur 1:: eine Seitenansicht eines stabförmigen Lichtleiters im Schnitt,

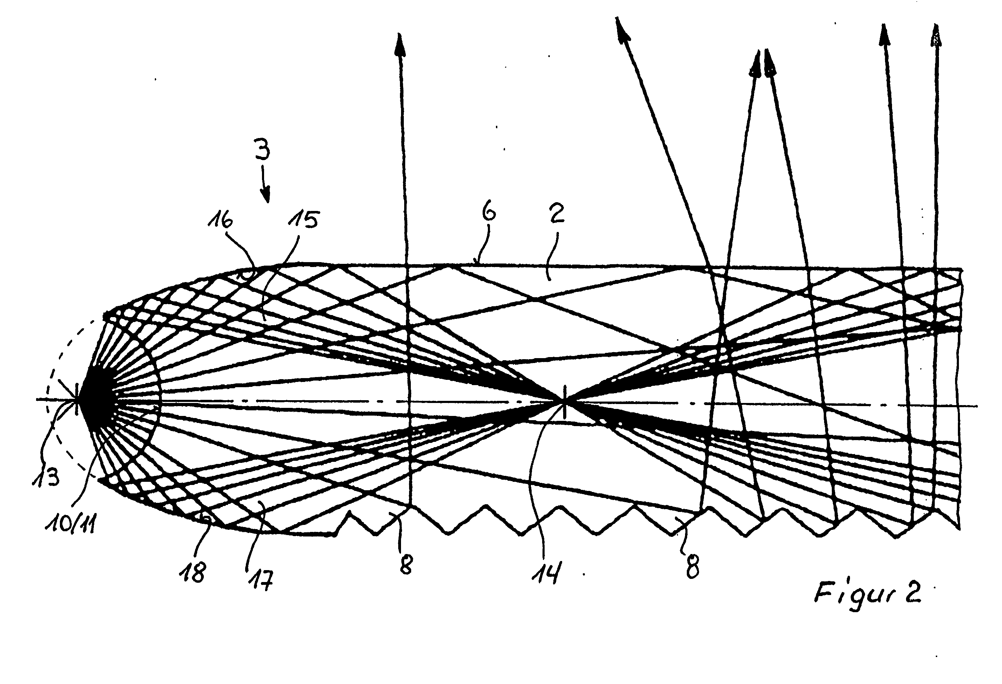

- Figur 2:: eine Seitenansicht des Lichteinkoppelbereiches von Figur 1 in vergrößerter Darstellung und

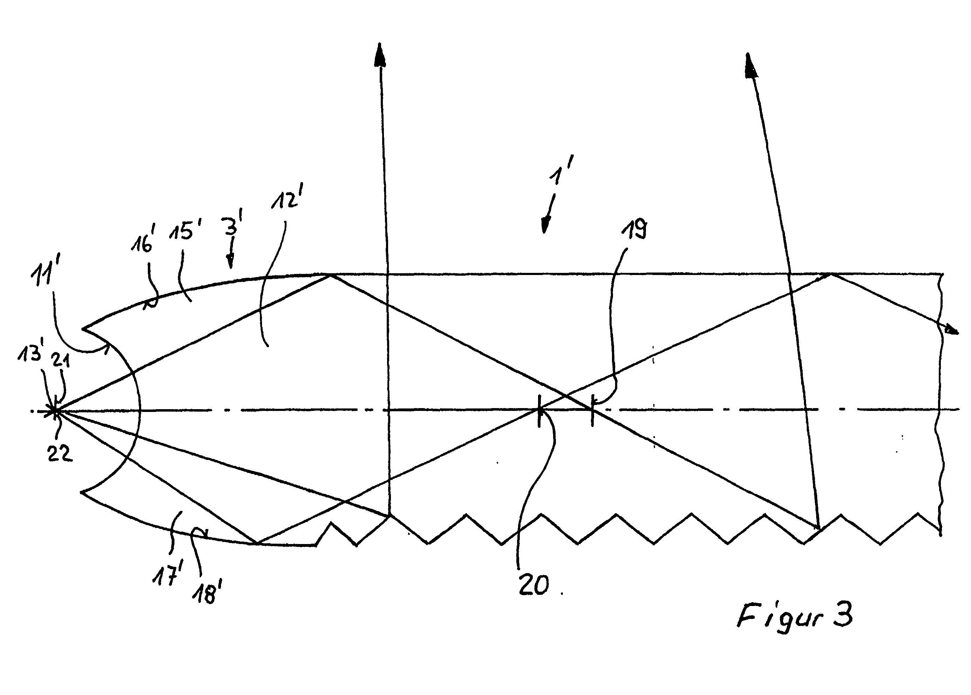

- Figur 3:: eine Seitenansicht eines Lichteinkoppelbereiches mit unterschiedlichen zweiten Brennpunkten in vergrößerter Darstellung.

Ein stabförmiger Lichtleiter 1 besteht im wesentlichen aus einem Leiterkörper 2 und einem Lichteinkoppelbereich 3 mit einer vorgelagerten Lichtquelle 4.

Der stabförmige Lichtleiter 1 bzw. der Leiterkörper 2 weist in Richtung seiner Längsachse 5 eine Lichtaustrittsfläche 6 auf. Der Lichtaustrittsfläche 6 gegenüberliegend weist der Leiterkörper 2 eine Reflexionsfläche 7 mit einer Mehrzahl von Prismen 8 als reflektierende Mittel auf.

An seinem der Lichtquelle 4 zugewandten Ende 9 weist der Lichtleiter 1 den Lichteinkoppelbereich 3 auf. Der Lichteinkoppelbereich 3 wird zur Lichtquelle 4 hin von einer Stirnfläche 10 begrenzt, die als eine Lichteinkoppelfläche 11 ausgebildet ist. Die Lichteinkoppelfläche 11 weist eine konkave, beispielsweise sphärische auf die Lichtquelle 4 abgestimmte Form auf. Der Lichteinkoppelbereich 3 ist in seinem Umfang als ein Halbellipsoid 12 ausgebildet, dessen erster Brennpunkt 13 der Lichteinkoppelfläche 11 zur Lichtquelle 4 hin vorgelagert ist.
Der erste Brennpunkt 13 fällt mit dem Lichtschwerpunkt der Lichtquelle zusammen, d. h., die Lichtquelle 4 ist mit ihrem Lichtschwerpunkt im ersten Brennpunkt 13 angeordnet. Der zweite Brennpunkt 14 des Halbellipsoid 12 ist im Bereich des Leiterkörpers 2 auf der Längsachse 5 angeordnet. Der Halbellipsoid 12 weist in seiner der Lichtaustrittsfläche 6 benachbarten oberen Hälfte eine obere Ausformung 16 und in seiner der Reflexionsfläche 7 benachbarten unteren Hälfte 17 eine untere Ausformung 18 auf. Die obere Ausformung 16 und die untere Ausformung 18 weisen neben dem gemeinsamen ersten Brennpunkt 13 den gemeinsamen zweiten Brennpunkt 14 auf. Die beiden Ausformungen 16, 18 sind gleich ausgebildet.

Gemäß einer weiteren Ausführungsform der Erfindung weist der Halbellipsoid 12' der Lichtaustrittsfläche 6' benachbart eine obere Hälfte 15' mit der oberen Ausformung 16' auf. Der Halbellipsoid 12' weist der Reflexionsfläche 7' benachbart eine untere Hälfte 17' mit einer unteren Ausformung 18' auf. Die obere Ausformung 16' und die untere Ausformung 18' sind unterschiedlich ausgeformt, so dass die obere Ausformung 16' einen oberen zweiten Brennpunkt 19 und die untere Ausformung 18' einen unteren zweiten Brennpunkt 20 aufweist, die in einem Abstand zueinander auf der Längsachse 5' angeordnet sind. Die obere Ausformung 16' weist einen oberen ersten Brennpunkt 21 auf, der mit einem unteren ersten Brennpunkt 22 der unteren Ausformung 18' zu einem ersten Brennpunkt 13' zusammenfällt. Die Lichtquelle 4 ist als SMD-Leuchtdiode ausgebildet, die auf einer nicht dargestellten Leiterplatte angeordnet ist.

Von der Lichtquelle 4 ausgehendes Licht tritt etwa radial zur sphärischen Lichteinkoppelfläche 11, 11' in den stabförmigen Lichtleiter 1, 1' bzw. in den Lichteinkoppelbereich 3, 3' ein und trifft auf die total reflektierenden Ausformungen 16, 16', 18, 18' des Halbellipsoids 12, 12'. Die von den Ausformungen 16, 16', 18, 18' reflektierten Strahlen werden durch den zweiten Brennpunkt 14, 19, 20 des Halbellipsoids 12, 12' geführt. Das von der oberen Ausformung 16, 16' reflektierte Licht wird direkt auf die Prismen 8 geleitet. Das von der unteren Ausformung 18, 18' reflektierte Licht wird über eine weitere Totalreflexion an der Lichtaustrittsfläche 6 auf die Prismen 8 geleitet. Von den Prismen 8 wird das Licht über die Lichtaustrittsfläche 6 ausgekoppelt. Durch die geeignete Wahl der Länge des stabförmigen Lichtleiters und des Halbellipsoids 12, 12' ist die Homogenität der Ausleuchtung des stabförmigen Lichtleiters so optimierbar.

Die Lichtaustrittfläche der Lichtquelle (4), die bei einer LED als eine Linse ausgebildet sein kann, ist bei einer bevorzugten Ausführungsform formschlüssig mit der Lichteinkoppelfläche (11, 11') des Lichtleiters verbunden.

## Patentansprüche

1. Stabförmiger Lichtleiter (1), insbesondere für eine Beleuchtungseinrichtung für Kraftfahrzeuge, mit einer in Richtung einer Längsachse (5) verlaufenden Lichtaustrittsfläche (6), einer der Lichtaustrittsfläche (6) gegenüber liegend angeordneten, reflektierende Mittel aufweisenden Reflexionsfläche (7) und an mindestens einem Ende einem zu einer als Lichteinkoppelfläche (11) ausgebildeten Stirnfläche hin sich verjüngenden Lichteinkoppelbereich wobei die Lichteinkoppelfläche (11) eine auf eine ihr vorgelagerte Lichtquelle (4) abgestimmte konkave Form aufweist, **dadurch gekennzeichnet, dass** der Lichteinkoppelbereich (3, 3') als ein ellipsoidförmiger Bereich (12, 12') ausgebildet ist, dessen erster Brennpunkt (13, 13') der Lichteinkoppelfläche (11, 11') vorgelagert ist und mit einem Lichtschwerpunkt der Lichtquelle (4) zusammenfällt, in dessen zweitem Brennpunkt (14, 19, 20) eingekoppeltes Licht der Lichtquelle (4) gesammelt wird, wobei der zweite Brennpunkt (14, 19, 20) im Bereich eines Leiterkörpers (2) des Lichtleiters (1) auf der Längsachse (5) angeordnet ist.

2. Stabförmiger Lichtleiter nach Anspruch 1, **dadurch gekennzeichnet, dass** die Lichtquelle (4) als eine Leuchtdiode ausgebildet ist.

3. Stabförmiger Lichtleiter nach Anspruch 1 oder 2, **dadurch gekennzeichnet, dass** die reflektierenden Mittel als Prismen (8) ausgebildet sind.

4. Stabförmiger Lichtleiter nach einem der Ansprüche 1 bis 3, **dadurch gekennzeichnet, dass** der ellipsoidförmige Bereich ein Halbellipsoid (12, 12') ist, der in seiner der Lichtaustrittsfläche (6') benachbarten oberen Hälfte (15, 15') eine obere Ausformung (16, 16') mit einem oberen zweiten Brennpunkt (19) und in seiner der Reflexionsfläche (7, 7') benachbarten unteren Hälfte (17, 17') eine untere Ausformung (18, 18') mit einem unteren zweiten Brennpunkt (20) aufweist.

5. Stabförmiger Lichtleiter nach Anspruch 4, **dadurch gekennzeichnet, dass** die obere Hälfte (15) und die untere Hälfte (17) des Halbellipsoids (12) eine gleiche Ausformung (16, 18) mit zusammenfallenden zweiten Brennpunkten (14) aufweisen.

6. Stabförmiger Lichtleiter nach Anspruch 4, **dadurch gekennzeichnet, dass** die obere Hälfte (15') und die untere Hälfte (17') des Halbellipsoids (12') eine unterschiedliche Ausformung (16', 18') aufweisen, so dass der obere zweite Brennpunkt (19) und der untere zweite Brennpunkt (20) in einem Abstand zueinander auf der Längsachse (5') angeordnet sind.

7. Stabförmiger Lichtleiter nach Anspruch 5 oder 6, **dadurch gekennzeichnet, dass** die obere Hälfte (15, 15') des Halbellipsoids (12, 12') einen oberen ersten Brennpunkt (21') aufweist, der mit dem unteren ersten Brennpunkt (22) der unteren Hälfte (17') des Halbellipsoids (12, 12') zusammenfällt.

8. Stabförmiger Lichtleiter nach einem der vorstehenden Ansprüche, **dadurch gekennzeichnet, dass** der Lichtleiter (1) zumindest in einem Abschnitt bogenförmig verläuft.

9. Stabförmiger Lichtleiter nach einem der vorstehenden Ansprüche, **dadurch gekennzeichnet, dass** die Lichteinkoppelfläche (11,11') formschlüssig mit der Lichtaustrittsfläche der Lichtquelle (4) verbunden ist.

## Claims

1. Rod-shaped light guide (1), in particular for a lighting device for motor vehicles, with a light-emitting face (6) running in the direction of the longitudinal axis (5), a reflecting face (7) disposed opposite the light-emitting face (6) and possessing reflecting means, and, at at least one end, a light launching region narrowing towards an end face configured as a light launching face (11) that has a concave shape matched to a light source (4) located in front of it, **characterized in that** the light launching region (3, 3') is configured as an ellipsoid-shaped region (12, 12') whose first focal point (13, 13') is located in front of the light launching face (11, 11') and coincides with a centre of concentration of the light emanating from the light source (4), [and] at whose second focal point (14, 19, 20) coupled-in light from the light source (4) is concentrated, the second focal point (14, 19, 20) being disposed in the region of a guide body (2) of the light guide (1) on the longitudinal axis (5).

2. Rod-shaped light guide according to Claim 1, **characterized in that** the light source (4) is configured as a light-emitting diode.

3. Rod-shaped light guide according to Claim 1 or Claim 2, **characterized in that** the reflecting means are configured as prisms (8).

4. Rod-shaped light guide according to any one of Claims 1 to 3, **characterized in that** the ellipsoid-shaped region is a semi-ellipsoid (12, 12') possessing an upper convexity (16, 16') in its upper half (15, 15') adjacent to the light-emitting face (6') that has an upper second focal point (19), and a lower convexity (18, 18') in its lower half (17, 17') adjacent to the reflecting face (7, 7') that has a lower second focal point (20).

5. Rod-shaped light guide according to Claim 4, **characterized in that** the upper half (15) and the lower half (17) of the semi-ellipsoid (12) have similar convexities (16, 18) with their second focal points (14) coinciding.

6. Rod-shaped light guide according to Claim 4, **characterized in that** the upper half (15') and the lower half (17') of the semi-ellipsoid (12') have different convexities (16', 18'), so that the upper second focal point (19) and the lower second focal point (20) are spaced apart on the longitudinal axis (5').

7. Rod-shaped light guide according to Claim 5 or Claim 6, **characterized in that** the upper half (15, 15') of the semi-ellipsoid (12, 12') has an upper first focal point (21') which coincides with the lower first focal point (22) of the lower half (17') of the semi-ellipsoid (12, 12').

8. Rod-shaped light guide according to any one of the preceding claims, **characterized in that** the light guide (1) extends in a curve in at least one portion.

9. Rod-shaped liked guide according to any one of the preceding claims, **characterized in that** the light launching face (11, 11') is positively connected to the light-emitting face of the light source (4).

## Revendications

1. Guide de lumière sous forme de tige (1), en particulier pour un dispositif d'éclairage pour véhicules, avec une surface d'émergence de lumière (6) s'étendant dans la direction d'un axe longitudinal (5); une surface de réflexion (7) disposée en vis-à-vis de la surface d'émergence de lumière (6), présentant des moyens réfléchissants et à au moins une extrémité une région de couplage de lumière s'amincissant en une surface frontale réalisée sous la forme d'une surface de couplage de lumière (11), la surface de couplage de lumière (11) présentant une forme concave adaptée à une source lumineuse (4) disposée devant elle, **caractérisé en ce que** la région de couplage de lumière (3, 3') est réalisée sous la forme d'une région ellipsoïdale (12, 12'), dont le premier foyer (13, 13') est disposé devant la surface de couplage de lumière (11, 11') et coïncide avec un centre de gravité de lumière de la source lumineuse (4), au second foyer (14, 19, 20) de laquelle est rassemblée la lumière couplée de la source lumineuse (4), le second foyer (14, 19, 20) étant disposé sur l'axe longitudinal (5) à proximité d'un corps de guide (2) du guide de lumière (1).

2. Guide de lumière sous forme de tige selon la revendication 1, **caractérisé en ce que** la source lumineuse (4) est réalisée sous la forme d'une diode émettrice de lumière.

3. Guide de lumière sous forme de tige selon la revendication 1 ou 2, **caractérisé en ce que** les moyens réfléchissants sont réalisés sous forme de prismes (8).

4. Guide de lumière sous forme de tige selon une des revendications 1 à 3, **caractérisé en ce que** la région ellipsoïdale est une demi-ellipsoïde (12, 12'), qui présente dans sa moitié supérieure (15, 15') adjacente à la surface d'émergence de lumière (6') une forme supérieure (16, 16') avec un second foyer supérieur (19) et dans sa moitié inférieure (17, 17') adjacente à la surface de réflexion (7, 7') une forme inférieure (18, 18') avec un second foyer inférieur (20).

5. Guide de lumière selon la revendication 4, **caractérisé en ce que** la moitié supérieure (15) et la moitié inférieure (17) de la demi-ellipsoïde (12) présentent une forme identique (16, 18) avec deux foyers coïncidants (14).

6. Guide de lumière sous forme de tige selon la revendication 4, **caractérisé en ce que** la moitié supérieure (15') et la moitié inférieure (17') de la demi-ellipsoïde (12') présentent une forme différentes (16', 18'), de sorte que le second foyer supérieur (19) et le second foyer inférieur (20) soient disposés écartés l'un de l'autre sur l'axe longitudinal (5').

7. Guide de lumière sous forme de tige selon la revendication 5 ou 6, **caractérisé en ce que** la moitié supérieure (15, 15') de la demi-ellipsoïde (12, 12') présente un premier foyer supérieur (21'), qui coïncide avec le premier foyer inférieur (22) de la moitié inférieure (17') de la demi-ellipsoïde (12, 12').

8. Guide de lumière sous forme de tige selon une des revendications précédentes, **caractérisé en ce que** le guide de lumière (1) est courbé au moins dans un tronçon.

9. Guide de lumière sous forme de tige selon une des revendications précédentes, **caractérisé en ce que** la surface de couplage de lumière (11, 11') est reliée par conformation à la surface d'émergence de lumière de la source lumineuse (4).
